# EUROPÄISCHE PATENTANMELDUNG

(11) **EP 0 533 029 A2**
(43) Veröffentlichungstag der Anmeldung: **24.03.1993**
(21) Anmeldenummer: 92115325.0
(22) Anmeldetag: 08.09.1992
(51) Int. Cl.: A01K 69/06, A01K 79/00

(54) **Verfahren und Vorrichtung zum Fangen von Fischen**

(30) Priorität: 19.09.1991 DE 9111693 U; 12.10.1991 DE 9112715 U; 12.05.1992 DE 4215531
(71) Anmelder: INSTITUT FÜR ENTWICKLUNG UND FORSCHUNG DR. VIELBERTH KG, D-93059 Regensburg (DE)
(72) Erfinder: Vielberth, Johann, Dr., D-8411 Zeitlarn (DE)
(74) Vertreter: Graf, Helmut, Dipl.-Ing.

(57) **Zusammenfassung**

Die Erfindung bezieht sich auf ein Verfahren sowie eine Vorrichtung zum Fangen von Fischen unter Verwendung von einem reusenartigen Fangbehälter (4,4a,4b) und einem eine Einschwimm- (17) und Ausschwimmöffnung (18,41) aufweisenden und zum Einbringen von Futter- und/oder Lockstoffen dienenden weiteren Behälter (13).

## Beschreibung

Die Erfindung bezieht sich auf Verfahren sowie auf eine Vorrichtung zum Fangen von Fischen gemäß Oberbegriff Patentanspruch 1 bzw. 5.

Aufgabe der Erfindung ist es, ein Verfahren sowie eine Vorrichtung aufzuzeigen, mit dem bzw. mit der es bei einem geringen Zeit- und Arbeitsaufwand möglich ist, mit hoher Effektivität Fische aus einem Gewässer zu fangen.

Zur Lösung dieser Aufgabe sind ein Verfahren bzw. eine Vorrichtung entsprechend dem kennzeichnenden Teil des Patentanspruches 1 bzw. 5 ausgebildet.

Das erfindungsgemäße Verfahren bzw. die erfindungsgemäße Vorrichtung eignen sich insbesondere für den allgemeinen Fischfang, aber auch für eine gezielte Fischentnahme in der Teichwirtschaft sowie für eine gezielte Entnahme oder Reduzierung von bestimmten Fischarten in einem Gewässer, die dort in einer zu hohen Quantität vorhanden sind. In diesem Sinne eignet sich die Erfindung zur Gewässersanierung, beispielsweise zur gezielten Entnahme von Weißfischen aus sogenannten "verbutteten Seen" bzw. Gewässern, was mit herkömmlichen Techniken, beispielsweise mit Zugnetzen oder mit Hilfe der Elektrofischerei nur unzureichend möglich ist.

Weiterbildungen der Erfindung sind Gegenstand der Unteransprüche.

Die Erfindung wird im folgenden anhand Figuren an einem Ausführungsbeispiel näher erläutert. Es zeigen:
- Fig. 1: in vereinfachter schematischer Darstellung eine Vorrichtung gemäß der Erfindung bei in das Gewässer abgesenktem Fütterbehälter sowie bei aus dem Gewässer herausgehobenem Fangbehälter;
- Fig. 2: eine ähnliche Darstellung wie Fig. 1, jedoch bei abgesenktem und an den Fütterbehälter angekoppeltem Fangbehälter;
- Fig. 3: eine ähnliche Darstellung wie Fig. 1, jedoch bei angehobenem, aber noch teilweise im Wasser befindlichem Fangbehälter;
- Fig. 4: in vereinfachter schematischer Darstellung eine weitere mögliche Ausführungsform einer Vorrichtung gemäß der Erfindung bei in das Gewässer abgesenktem Futterbehälter und Fangbehälter, kurz vor dem endgültigen Ankoppeln des Fangbehälters an den Futterbehälter;
- Fig. 5: in vereinfachter schematischer Darstellung und in Seitenansicht eine weitere mögliche Ausführungsform der erfindungsgemäßen Vorrichtung;
- Fig. 6: in verschiedenen Positionen (a - d) und jeweils in perspektivischer Darstellung die Vorrichtung der Fig. 5;
- Fig. 7: in vereinfachter perspektivischer Darstellung eine weitere mögliche Ausführungsform einer Vorrichtung zur Verwendung bei einem Verfahren gemäß der Erfindung;
- Fig. 8: in verschiedenen Positionen (a - c) und jeweils in perspektivischer Darstellung die Vorrichtung der Fig. 7.

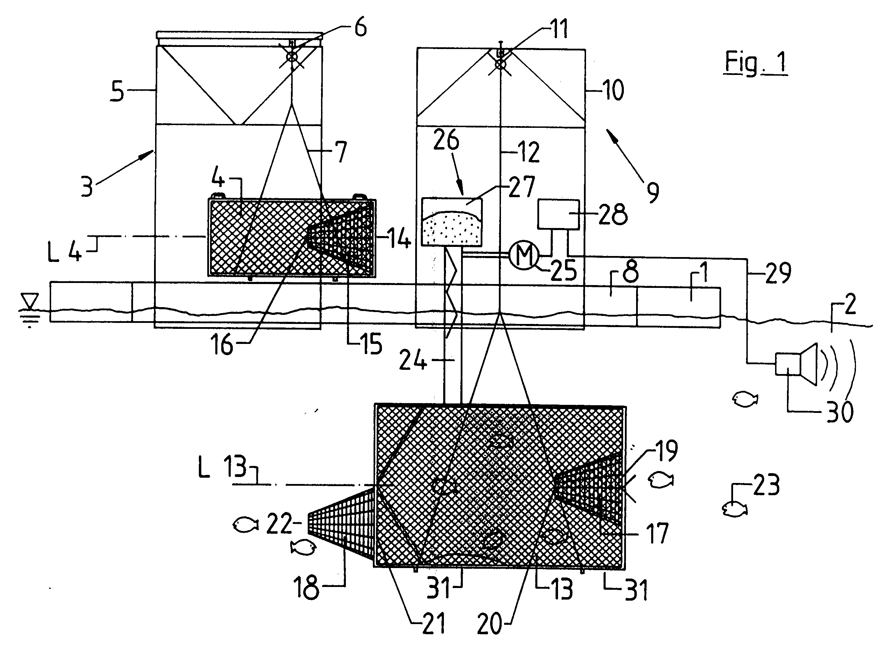

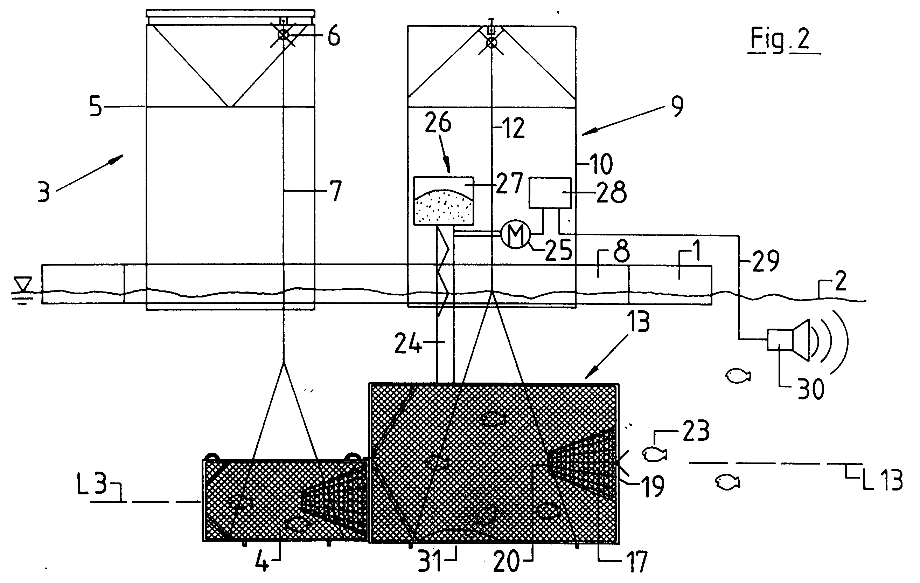

In den Figuren 1 bis 4 ist 1 eine Plattform, die als Schwimmkörper schwimmend in einem Gewässer 2 angeordnet ist.

Auf der Plattform 1 befindet sich eine erste Hebeeinrichtung 3, mit der ein Fangbehälter 4 in das Gewässer 2 abgesenkt und aus diesem wieder angehoben werden kann. Die Hebeeinrichtung 3 besteht hierfür beispielsweise aus einem an der Plattform 1 vorgesehenen Traggestell 5, an welchem eine Laufkatze 6 mit einem kranartigen Hebezeug 7 beweglich vorgesehen ist, und zwar derart, daß das Absenken und Anheben des Fütterbehälters 4 an einer Seite der Plattform oder aber bei der dargestellten Ausführungsform im Bereich einer in der Plattform 1 vorgesehenen mittigen Ausnehmung 8 erfolgen kann.

An der Plattform 1 ist eine weitere Hebeeinrichtung 9 vorgesehen, die ebenfalls im wesentlichen aus einem an der Plattform vorgesehenen Traggestell 10 und aus einer an dem Traggestell bewegbaren Laufkatze 11 mit Hebezeug 12 besteht. Die Hebeeinrichtung 9 dient zum Absenken und Anheben eines Fütterbehälters 13, der in gleicher Weise wie der Fangbehälter 4 im Bereich der Öffnung 8 angehoben und abgesenkt werden kann.

Bei der dargestellten Ausführungsform ist der Fangbehälter 4 als quaderförmiger, an seinen Flächen bzw. Wandbereichen durch ein Drahtgitter verschlossener Korb ausgebildet. An einer Stirnseite weist der Fangbehälter 4 eine Öffnung 14 auf, die gleichzeitig die größere Öffnung eines ebenfalls aus dem Drahtgitter hergestellten reusenartigen Elementes 15 ist, welches in an sich bekannter Weise eine kegelstumpfförmige Formgebung aufweist, mit seiner Achse achsgleich mit der Längserstreckung L4 des Fangbehälters 4 liegt und mit der im Querschnitt kleineren Öffnung 16 im Inneren des Fangbehälters 4 angeordnet ist, allerdings mit Abstand von der der Öffnung 14 abgewandten anderen Stirnseite des Fangbehälters 4. Bei der dargestellten Ausführungsform ist die Länge des reusenartigen Elementes 15 in Richtung der Achse L4 kleiner als die Hälfte der Längserstreckung des Fangbehälters 4 in dieser Achsrichtung.

Wie die Figuren zeigen, ist der Fangbehälter 4 an dem Hebezeug 7 so gehalten, daß er mit seiner Achse L4 in horizontaler, zumindest jedoch in etwa horizontaler Richtung angeordnet ist. Mit Ausnahme der Öffnungen 14 und 16 in dem reusenartigen Element 15 ist der Innenraum des Fangbehälters 4 durch das Drahtgitter vollständig geschlossen.

Bei der dargestellten Ausführungsform ist der Fütterbehälter 13 ebenfalls als quaderförmiger Korb aus Drahtgitter ausgebildet. An seinen beiden, senkrecht zur Längserstreckung L13 angeordneten Stirnseiten ist der Fütterbehälter jeweils mit einem reusenartigen Element versehen, und zwar mit dem reusenartigen Element 17 an der in den Figuren rechten Stirnseite und mit dem reusenartigen Element 18 an der dortigen linken Stirnseite. Das reusenartige Element 17, welches im Innenraum des Fütterbehälters 13 angeordnet ist und mit seiner Längserstreckung achsgleich mit der Achse L13 liegt, bildet mit seiner größeren Öffnung 19 eine Öffnung des Fütterbehälters an der rechten Stirnseite. Die kleinere Öffnung 20 des wiederum kegelstumpfförmig geformten und aus dem Drahtgitter hergestellten Elementes 17 befindet sich mit einem relativ großen Abstand von der in den Figuren linken Stirnseite des Fütterbehälters im Inneren dieses Behälters.

Das reusenartige Element 18, welches wiederum kegelstumpfförmig ausgebildet ist und aus dem Drahtgitter besteht, steht über die in den Figuren linke Stirnseite des Fütterbehälters 13 vor und besitzt an dieser Stirnseit die größere Öffnung 21, mit der das reusenartige Element 18 mit dem Innenraum des Fütterbehälters 13 in Verbindung steht. An dem vom Fütterbehälter wegstehenden Ende weist das Element 18 die kleinere Öffnung 22 auf. Bei der dargestellten Ausführungsform liegt das Element mit seiner Achse parallel zur Achse L13 gegenüber dieser nach unten versetzt. Grundsätzlich ist es aber auch möglich, daß die beiden reusenartigen Elemente 17 und 18 achsgleich miteinander angeordnet sind, und zwar entweder achsgleich mit der Längsachse L13 oder gegenüber dieser versetzt.

Die Maschengröße des für die Behälter 4 und 13 und die reusenartigen Elemente 15, 17 und 18 verwendeten Drahtgitters ist so gewählt, daß die abzufischenden Fische 23 in einer gewünschten Größe entnommen werden können. Der Innenraum des Fütterbehälters 13 ist über einen flexiblen Kanal oder Schlauch 24 mit einem einen Motor 25 aufweisenden Fütterungsapparat bzw. mit dem Vorratsbehälter 27 dieses Fütterungsapparates 26 verbunden. Der Fütterungsapparat 26 ist zusammen mit einer Steuereinrichtung 28 auf der Plattform 1, beispielsweise an dem dortigen Rahmen 10 vorgesehen. Die Steuereinrichtung 28, die nach einer vorprogrammierten Zeitsteuerung den Fütterungsautomat aktiviert bzw. den Motor 25 zur Abgabe von Fischfutter in den Innenraum des Fütterbehälters einschaltet, weist weiterhin auch einen Generator zur Erzeugung eines elektrischen Signales auf, mit dem über eine Leitung 29 ein im Gewässer 2 eingetauchter Signalgeber 30 (z.B. Unterwasserlautsprecher) verbunden ist. Der Signalgeber 30 gibt immer dann ein akustisches Signal ab, wenn auch der Fütterungsautomat 26 aktiviert ist. Bevorzugt ist die Steuerung so, daß der elektrische Signalgeber 30 jeweils eine vorgegebene Zeitperiode (z.B. eine halbe Minute) vor dem Einschalten des Fütterungsautomaten eingeschaltet wird und während der gesamten Dauer der Futterabgabe eingeschaltet bleibt.

Zum Auffangen von nicht verwertetem Futter kann der Fütterbehälter 13 an seinem Boden mit einer geschlossenen Bodenwand oder aber mit einer anderen Einrichtung zum Auffangen des Futters ausgebildet sein.

Die beschriebene Vorrichtung dient dazu, um aus dem Gewässer 2 mit möglichst geringem Aufwand und effektiv die gewünschten Fische 23 abzufischen.

Hierfür werden die Fische 23 in einer Aufzucht- bzw. Gewöhnungsphase, die mehrere Wochen, aber auch nur mehrere Tagen betragen kann, bei in das Gewässer 2 abgesenktem Fütterbehälter 13 und aus dem Gewässer 2 angehobenen Fangbehälter 4, also bei dem in der Fig. 1 dargestellten Zustand der Vorrichtung gefüttert, d.h. in bestimmten, vorgegebenen Zeitintervallen erfolgt eine Futterabgabe an den Innenraum des Fütterbehälters 13, zusammen mit dem akustischen Signal durch den Signalgeber 30. Die Fische 23 können zur Futteraufnahme über das Element 17 in den Fütterbehälter 13 einschwimmen und über das Element 18 aus dem Fütterbehälter ausschwimmen.

Durch die Elemente 17 und 18 ist für die Fische 23 ein Ein-und Ausschwimmen in umgekehrter Richtung praktisch nicht möglich. Da die Futterabgabe mit dem akustischen Signal des Signalgebers 30 einhergeht, sind die Fische 23 schließlich so trainiert, daß sie beim Ertönen des akustischen Signals in großer Menge in den Fütterbehälter 13 einschwimmen.

Zum Abfischen wird der Fangbehälter 4 mit der Hebeeinrichtung 3 in das Gewässer 2 abgesenkt, und zwar derart, daß die beiden Behälter 4 und 13 einander unmittelbar benachbart sind und das Element 18 in das Element 15 eingreift. Die in den Fütterbehälter 13 einschwimmenden Fische 23 verlassen diesen in der gewohnten Weise am Element 18 und gelangen dadurch in den Fangbehälter 4, den die Fische 23 nicht mehr verlassen können.

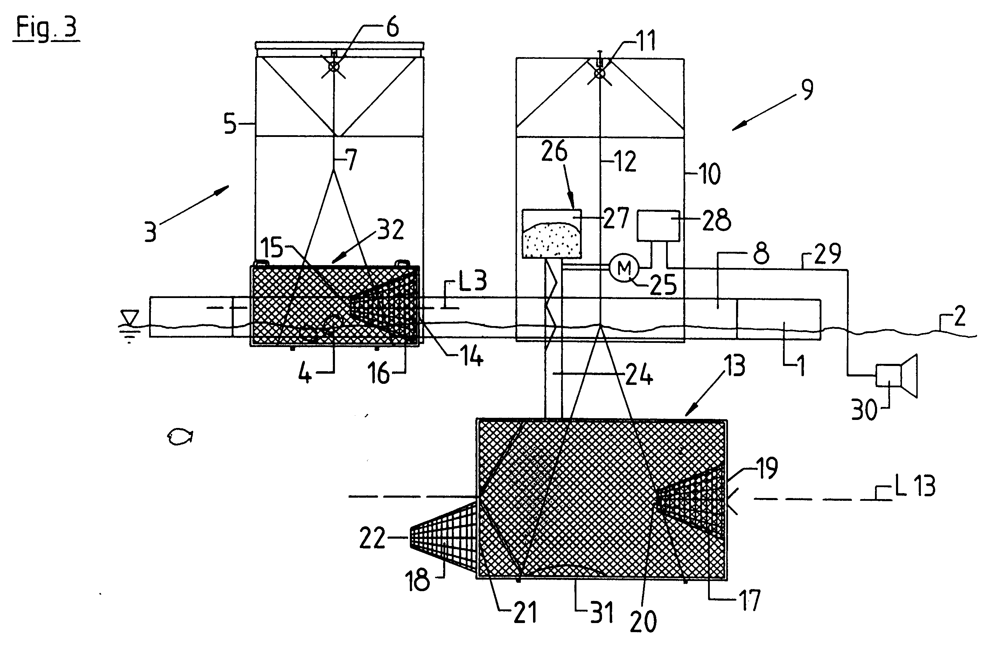

Zur Entnahme sowie zum Aussortieren nach Fischsorte und/oder -größe wird der Fangbehälter 4 mit Hilfe der Hebeeinrichtung 3 in die in der Fig. 3 dargestellte Position angehoben, in der der Fangbehälter 4 mit seinem unteren Bereich noch im Gewässer 2 eingetaucht ist, der Fangbehälter 4 mit seiner Oberseite aber genügend weit aus dem Gewässer 2 vorsteht. An der Oberseite ist der Fangbehälter 4 vorzugsweise mit einer Klappe 32 versehen, die zum Entnehmen der Fische 23 geöffnet werden kann.

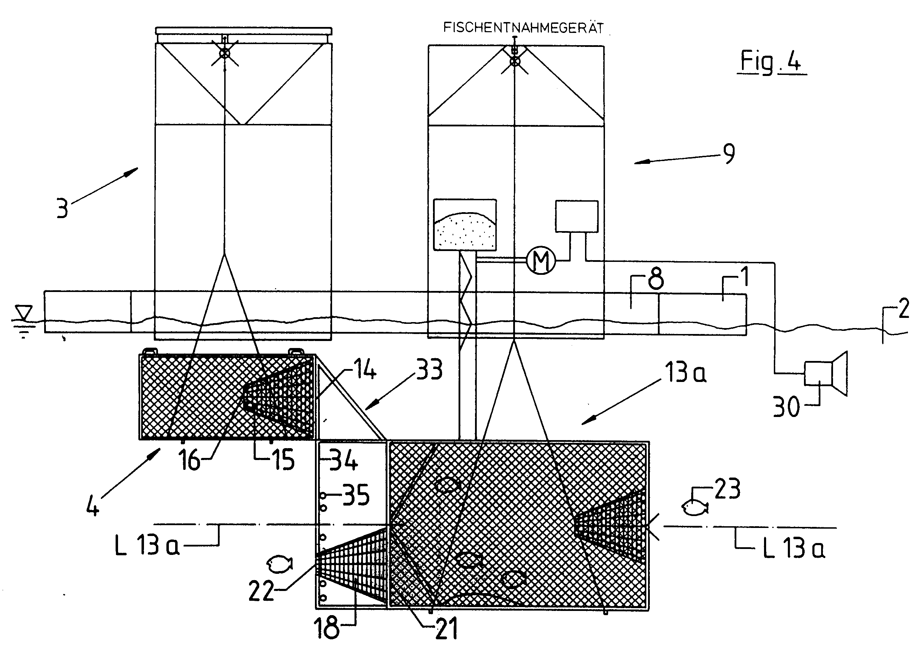

Die in der Fig. 4 dargestellte Vorrichtung unterscheidet sich von der Vorrichtung der Fig. 1-3 im wesentlichen nur dadurch, daß anstelle des Fütterbehälters 13 ein Fütterbehälter 13a vorgesehen ist, der an seiner mit dem reusenartigen Element 18 versehenen Stirnseite ein Rahmenteil 33 aufweist, welches an dieser Stirnseite des Fütterbehälters 13a befestigt ist und über diese Stirnseite in Richtung der Längsachse L13a vorsteht. Das Rahmenteil 33 bildet in einer Ebene, die senkrecht zu der Achse L13a verläuft, eine vertikale Führung, d.h. das Rahmenteil 33 weist hierzu zwei vertikale, parallel zueinander angeordnete Führungsschienen 34 auf. In der Ebene der von den Führungsschienen 34 gebildeten Führung ist auch die Öffnung 22 vorgesehen. Der Fangbehälter 4 ist an seiner das reusenartige Element 15 aufweisenden Stirnseite mit in die Führungsschiene 34 passenden Gegenführungen versehen.

Zum Abfischen wird der Fangbehälter 4 beim Absenken in das Gewässer 2 mit seinen Gegenführungen in die Führungsschienen 34 des Fütterbehälters 13a eingeführt und dann an der von den Führungsschienen 34 gebildeten Führung gleitend soweit abgesenkt, bis sich die Öffnung 14 im Bereich der Öffnung 22 befindet. Um zu verhindern, daß beim Abfischen Fische 23 nach dem Durchschwimmen der Öffnung 22 anstelle eines Einschwimmens in das reusenartige Element 15 seitlich ausweichen können, ist am Rahmenteil 33 in der von den Führungsschienen 34 gebildeten Führungsebene ein Gitter 35 vorgesehen, welches bei an den Fütterbehälter 13a angekoppeltem Fangbehälter 4 den außerhalb der Öffnung 22 liegenden Teil der Öffnung 14 nach außen hin abdeckt. Das reusenartige Element 15 mit der großen Öffnung 14 hat bei dieser Ausführung auch den Vorteil, daß beim Ankuppeln des Fangbehälters 4 an den Fütterbehälter 13a gewisse Tolleranzen hinsichtlich der Positionierung des Fangbehälters 4 relativ zum Fütterbehälter 13a möglich sind.

Bei der vorstehenden Beschreibung wurde davon ausgegangen, daß der Fangbehälter 4 und der Fütterbehälter 13, 13a jeweils aus einem Rahmen aus einem geeigneten Material, beispielsweise aus einem Metall- oder Stahlrahmen besteht und die Wandelemente des Fangbehälters 4 bzw. des Fütterbehälters 13, 13a von einem Metall- bzw. Drahtgitter gebildet sind.

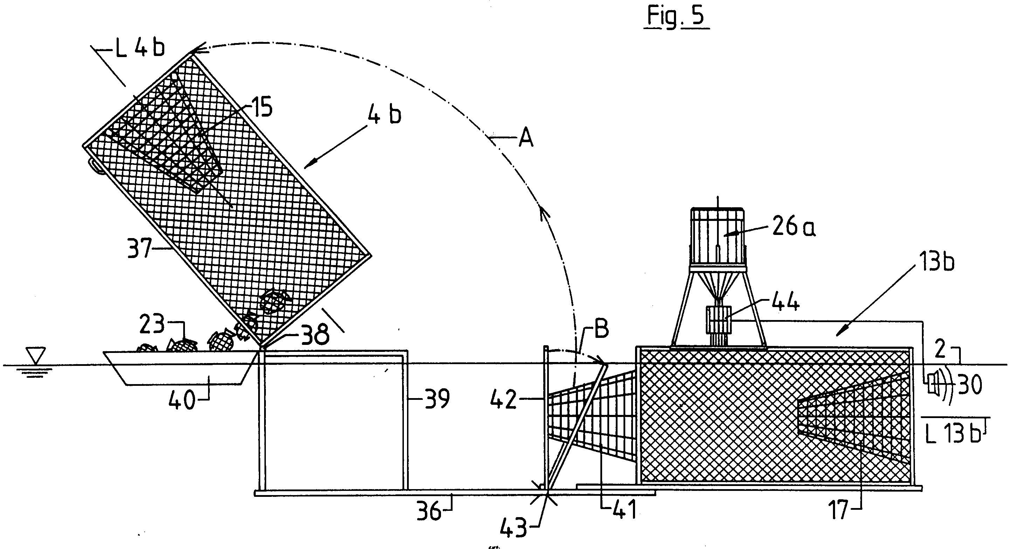

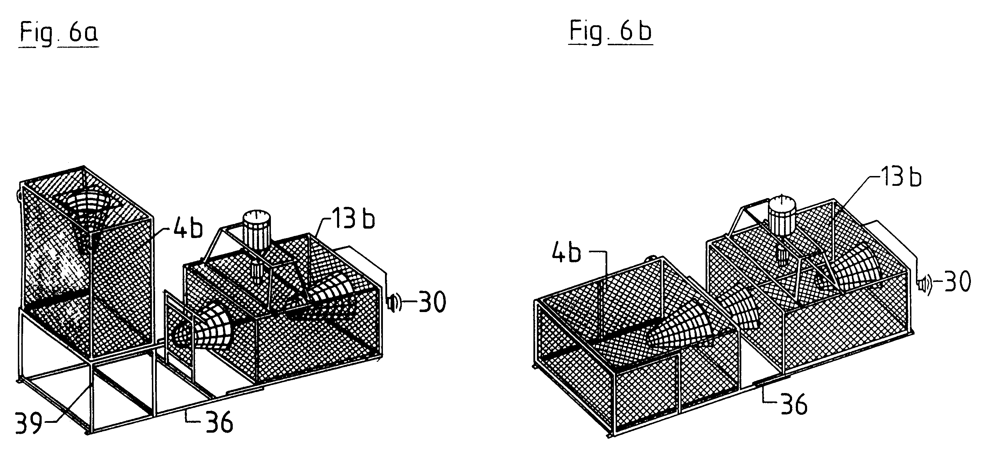

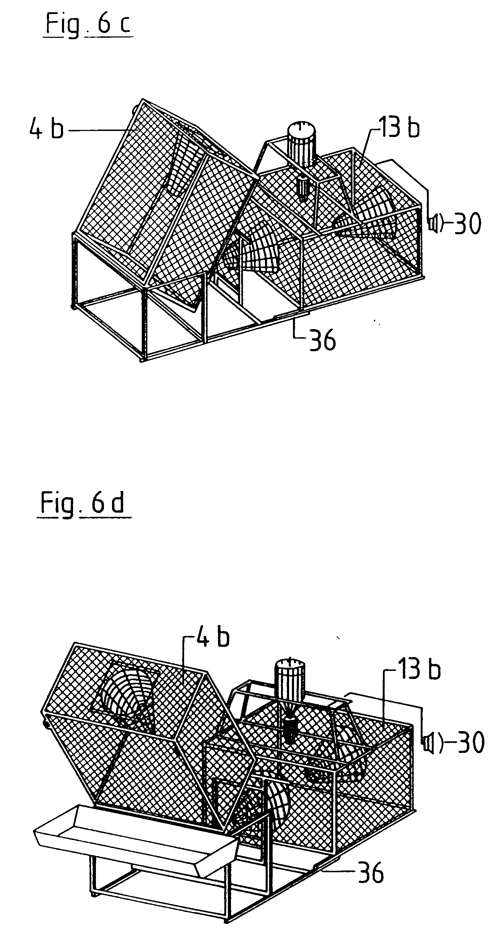

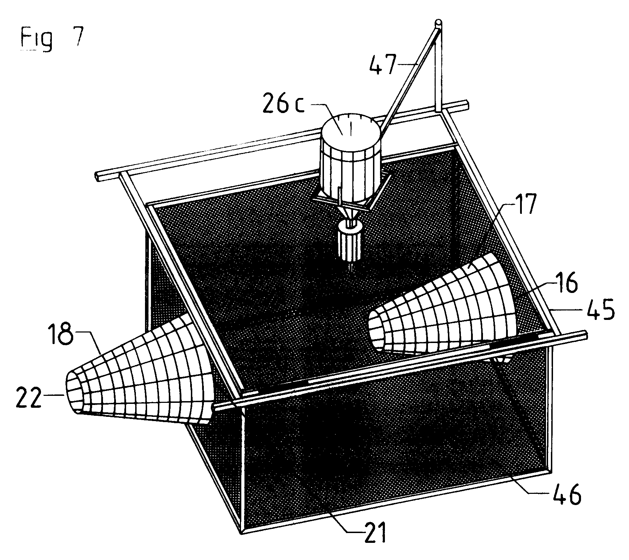

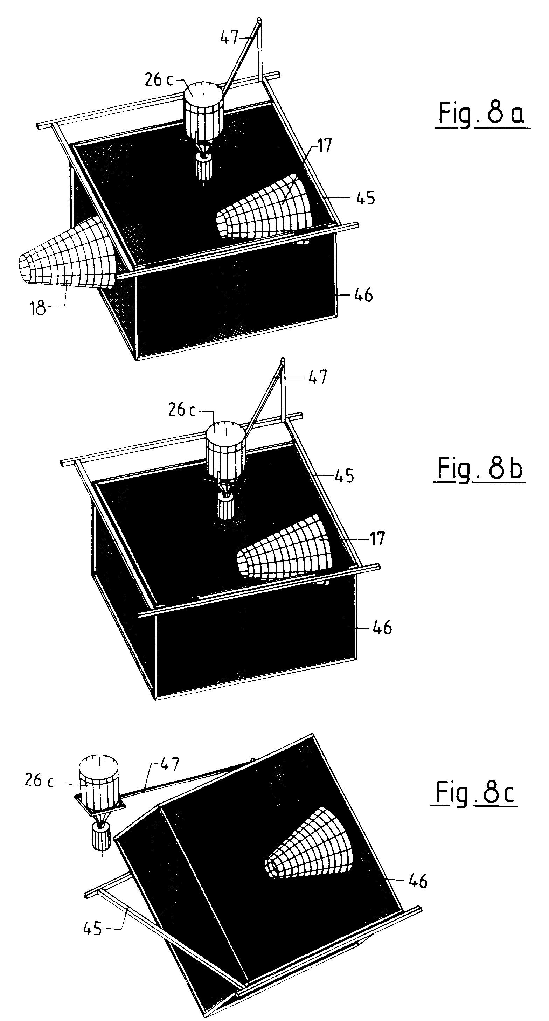

Die in den Figuren 5 und 6 dargestellte Vorrichtung unterscheidet sich von der Vorrichtung der Figuren 1 bis 3 u.a. dadurch, daß anstelle des Konditionierungs- bzw. Fütterbehälters 13 ein Fütterbehälter 13b und anstelle des Fangbehälters 4 ein Fangbehälter 4b vorgesehen sind, und zwar an einem Tragrahmen 36. Der Fangbehälter 4b entspricht im wesentlichen dem Fangbehälter 4, d.h. der quaderförmige Fangbehälter 4b besitzt an einer Stirnseite die von dem reusenartigen Element 15 gebildete Einschwimmöffnung. An seiner Oberseite ist der Fangbehälter 4 wiederum durch einen abnehmbaren Deckel 37 verschlossen. Anstelle des Deckels 37 kann auch ein Schieber vorgesehen sein, der zwischen einer den Fangbehälter 4b verschließenden und einer geöffneten Stellung verschiebbar ist.

An seiner dem Element 15 abgewandten Stirnseite, und zwar im Bereich des Übergangs bzw. der Kante zwischen dieser Stirnseite und der den Deckel 37 aufweisenden Oberseite ist der Fangbehälter 4b mittels eines Gelenkes 38 um eine horizontale Achse an einem Teil 39 des Rahmens 36 schwenkbar gelagert. Die Achse des Gelenkes 38 verläuft dabei senkrecht zur Längserstreckung L4b des Fangbehälters 4b bzw. des Elementes 15. Der Schwenkwinkel ist größer als 90^{o}, so daß der Fangbehälter 4b aus einer Gebrauchs- oder Fangstellung, in der er mit seiner Längsachse L4b in horizontaler Richtung angeordnet ist, z. B. in die in der Fig. 5 dargestellte Schräglage gekippt werden kann, in der die mit dem Deckel 37 versehene Oberseite des Fangbehälters 4 nach unten weist, um so die im Fangbehälter befindlichen Fische 23 in eine Auffangbehälter oder in ein Boot 40 entleeren zu können.

Der ebenfalls quaderförmig ausgeführte Fütterbehälter 13b besitzt an einer Stirnseite das die Einschwimmöffnung bildende reusenartige Element 17 und an der gegenüberliegenden Stirnseite das die Ausschwimmöffnung bildende reusenartige Element 41, welches von der Funktion her dem Element 18 entspricht, allerdings von einem flexiblen Gitter- bzw. Netz gebildet ist.

An seinem, dem Fütterbehälter 13b entfernt liegenden und die kleinere Öffnung aufweisenden Ende ist das Element 41 an einem Hilfsrahmen 42 befestigt, der an seiner Unterseite mittels eines Gelenkes 43 an dem Rahmen 36 schwenkbar vorgesehen ist, und zwar um eine horizontale Achse parallel zur Achse des Gelenkes 38. Das Gelenk 43 befindet sich unterhalb der Längsachse bzw. Längserstreckung des Elementes 41, die (Längsachse) mit der Längsachse L13b des Fütterbehälters zusammenfällt. Bei in Gebrauchsstellung befindlichem Fangbehälter (Fig. 6, Position b) liegt der Hilfsrahmen 42, dessen Rahmenfläche außerhalb der Öffnung des Elementes 41 ebenfalls mit einem Gitter oder Netz versehen ist, gegen die das Element 15 aufweisende Stirnfläche des Fangbehälters 4b an, und zwar derart, daß die beiden Elemente 41 und 15 aneinander anschließen. Durch nicht näher dargestellte Verriegelungsmittel ist der Hilfsrahmen 42 an dem Fangbehälter 4b verriegelt.

Soll der Fangbehälter 4b entsprechend dem Pfeil A der Fig. 5 aus der Gebrauchsstellung geschwenkt werden, so wird zuvor der Hilfsrahmen 42 entsprechend dem Pfeil B zur Seite geschwenkt.

Auf dem Fütterbehälter 13b befindet sich der dem Fütterungsautomat 26 entsprechende Fütterungsautomat 26a zusammen mit einer elektrischen Einrichtung 44, die zur Ansteuerung des Fütterungsautomaten sowie des ebenfalls am Fütterbehälter 13b vorgesehenen Signalgebers 30 dient.

Mit geeigneten Mitteln, beispielsweise mit wenigstens einem nicht dargestellten Schwimmkörper oder mit ebenfalls nicht dargestellten Pfosten sind der Rahmen 36 mit denen an diesen vorgesehenen Elementen so im Gewässer 2 positioniert, daß das Rahmenteil 39 mit seiner das Gelenk 38 aufweisenden Oberseite, der Fangbehälter 4b in der Gebrauchsstellung sowie auch der Fütterbehälter 13b mit seiner Oberseite geringfügig aus dem Gewässer 2 vorstehen.

Die Fig. 6 zeigt in verschiedenen Positionen a - d unterschiedliche Stellungen des Fangbehälters 4b, und zwar in einer Stellung für die Konditionierung bzw. Gewöhnung der Fische 23 (Position a), in der Fang- bzw. Gebrauchsstellung (Position b) sowie in einer ersten und zweiten Entnahmestellung (Positionen c und d). In den Positionen a und d ist der Fangbehälter 4b völlig aus dem Wasser herausgeschwenkt. In der Position c befindet sich der Fangbehälter 4b noch teilweise im Wasser, so daß die gefangenen Fische 23 schonend im Fangbehälter 4b aufgenommen und beispielsweise von Hand aussortiert werden können.

Fig. 7 zeigt in perspektivischer Darstellung eine weitere, mögliche Ausführungsform der Erfindung. In der Fig. 8 ist diese Ausführungsform in verschiedenen Positionen a - c bzw. in verschiedenen Betriebszuständen wiedergegeben.

Die in diesen Figuren wiedergegebene Vorrichtung besteht aus einem Rahmen 45, der beispielsweise an der Plattform 1 derart befestigt ist, daß in den Zustand, der in der Fig. 7 sowie in den Positionen a und b der Fig. 8 wiedergegeben ist, der am Rahmen 45 vorgesehene Behälter 46 im Gewässer eingetaucht ist. Der Behälter 46 ist dem Behälter 13 entsprechend ausgebildet, d.h. er ist quaderförmig ausgeführt und besitzt gitter- oder netzartige Wandelemente. An einer Seite ist die von dem reusenartigen Element 17 gebildete Einschwimmöffnung 19 vorgesehen. An der gegenüberliegenden Seite befindet sich das reusenartige Element 18 mit den beiden Öffnungen 21 und 22. Am Rahmen 45 ist ein schwenkbarer Halter 47 vorgesehen, an welchem ein Fütterungsautomat 26c befestigt ist.

In der Fig. 7 sowie in den Positionen a und b der Fig. 8 befindet sich dieser Fütterungsautomat über dem Behälter 46. In der Position c der Fig. 8 ist der Fütterungsautomat 26c zur Seite geschwenkt.

Die Arbeitsweise mit dem Gerät nach den Figuren 7 und 8 läßt sich, wie folgt, beschreiben:

Es wird davon ausgegangen, daß der Behälter 46 in das Gewässer eingesetzt ist. Nun folgt zunächst in einer Konditionierphase ein Einbringen von Futter- oder Lockstoffen in den Behälter 40, und zwar in der Weise, wie dies vorstehend für die Fütterbehälter 13, 13a und 13b beschrieben wurde. Die Fische können während dieser Konditionierungs- bzw. Gewöhnungsphase den Behälter 46 in der durch die reusenartigen Elemente 17 und 18 vorgegebenen Richtung durchschwimmen.

Nach Ablauf der Konditionierungs- bzw. Gewöhnungsphase wird der Behälter am reusenartigen Element 18 verschlossen, was dadurch geschehen kann, daß das reusenartige Element z.B. an der Öffnung 21 oder 22 verschlossen wird, oder aber das Wandelement, welches die Reuse 18 aufweist, durch ein Wandelement ohne Reuse ersetzt wird. Dieser Zustand ist in der Position b der Fig. 8 wiedergegeben.

Am Ende der Fangphase wird nach dem Wegschwenken des Halters 47 der Behälter 46 im Rahmen 45 gekippt, wodurch nach Öffnen des Behälters 46 ein bequemes Entnehmen der gefangenen Fisch möglich ist.

Die Erfindung wurde anhand der Figuren an Ausführungsbeispielen erläutert. Es versteht sich, daß zahlreiche Änderungen sowie Abwandlungen möglich sind, ohne daß dadurch der der Erfindung zugrundeliegende Gedanke verlassen wird.

So ist es beispielsweise möglich, den Fangbehälter 4, 4b sowie den Fütterbehälter 13, 13a, 13b oder deren Wandelemente auch aus einem anderen Material herzustellen, beispielsweise aus einem Rahmen, der anstelle eines Drahtgitters ein aus Eisen- oder Stahlstäben hergestelltes feines Gitter oder ein Netz aus einem geeigneten Material, z. B. Kunststoff- und/oder Naturfaser oder ein Kunststoffgitter aufweist. Die Wände des Fangbehälters 4, 4b und/oder des Fütterbehälters 13, 13a, 13b können auch ganz oder teilweise aus einem durchsichtigen Material, z.B. aus Glasscheiben oder aus Scheiben aus Acrylglas hergestellt sein, wobei die Ausbildung an die Art des jeweils hautsächlich zu fangenden Fisches angepaßt ist. Bei einer Vorrichtung zum Fangen von Aalen können auch feste Wandelemente verwendet sein.

Anstelle des in das Gewässer 2 eingetauchten akustischen Signalgebers 30 können auch andere akustische Signalgeber verwendet werden, beispielsweise Einrichtungen, die über die Plattform 1 ein akustisches Signal im Gewässer 2 erzeugen. So genügt u.U. bereits das von einer Betätigungseinrichtung des Fütterautomaten 26 erzeugte akustische Signal. Anstelle eines akustischen Signalgebers oder zusätzlich hierzu können auch andere Signalgeber vorgesehen sein, beispielsweise optische Signalgeber oder aber Einrichtungen, die eine gewisse Bewegung im Wasser erzeugen. Die Art des bzw. der jeweils verwendeten Signalgeber hängt wiederum im wesentlichen von der Art der zu fangenden Fische 23 ab.

Selbstverständlich ist es auch möglich, die Vorrichtung nicht schwimmend, d.h. beispielsweise am Ufer oder aber an einem Steg vorzusehen.

Zur Überwachung und Optimierung kann am Fütterungsbehälter auch eine Unterwasser-Video-Kamera vorgesehen sein, über die dann die Art der ein- und ausschwimmenden Fische sowie die Futteraufnahme überwacht werden können.

Für Reparatur- und Reinigungszwecke, für einen Standortwechsel der Vorrichtung sowie am Ende der Fangsaison wird der Fütterbehälter 13, 13a mit Hilfe der Hebeeinrichtung 9 angehoben bzw. aus dem Gewässer 2 herausgehoben. Weiterhin ist es durch die Hebeeinrichtung 9 auch möglich, den Fütterbehälter 13, 13a im Gewässer 2 in einer Tiefe zu positionieren, die dem zu fangenden Fisch 23 optimal angepaßt ist, d.h. in einer Tiefe, in der die größte Ausbeute an den zu fangenden Fischen zu erwarten ist.

Bei der Ausführung nach Fig. 4 kann es auch zweckmäßig sein, das Rahmenteil 33 so auszuführen, daß es bei abgesenktem Fütterbehälter 13a aus der Gewässeroberfläche vorsteht, um so das Einfädeln des Fangbehälters 4 in die Führungsschienen 34 zu erleichtern. In diesem Fall kann aber der Fangbehälter 4 auch ständig mit dem Fütterbehälter 13a in Verbindung bleiben.

### Aufstellung der verwendeten Bezugszeichen

- 1: Plattform
- 2: Gewässer
- 3: Hebeeinrichtung
- 4: Fangbehälter
- 5: Rahmen
- 6: Laufkatze
- 7: Hebezeug
- 8: Ausnehmung
- 9: Hebeeinrichtung
- 10: Rahmen
- 11: Laufkatze
- 12: Hebezeug
- 13, 13a: Fütterbehälter
- 14: Öffnung
- 15: Element
- 16: Öffnung
- 17, 18: Element
- 19, 20: Öffnung
- 21, 22: Öffnung
- 23: Fisch
- 24: Kanal
- 25: Motor
- 26: Fütterungsautomat
- 27: Vorratsbehälter
- 28: Steuereinrichtung
- 29: Leitung
- 30: Signalgeber
- 31: Boden
- 32: Oberseite
- 33: Rahmenelement
- 34: Führungsschiene
- 35: Gitter
- 36: Rahmen
- 37: Deckel
- 38: Gelenk
- 39: Teilstück
- 40: Boot
- 41: Element
- 42: Hilfsrahmen
- 43: Gelenk
- 44: Steuereinrichtung
- 45: Rahmen
- 46: Behälter
- 47: Haltearm

## Patentansprüche

1. Verfahren zum Fangen von Fischen (23) unter Verwendung wenigstens eines, zumindest eine Einschwimmöffnung (15) aufweisenden Fangbehälters (4, 4a, 4b) und wenigstens eines zumindest eine Einschwimmöffnung (17) sowie eine Ausschwimmöffnung (18, 41) aufweisenden Compartments bzw. weiteren Behälters, an dessen Ausschwimmöffnung (18, 41) der Fangbehälter (4, 4b) mit seiner Einschwimmöffnung (15) während einer Fangphase angekoppelt ist, dadurch gekennzeichnet, daß in einer der Fangphase vorausgehenden Gewöhnungs- bzw. Konditionierungsphase der Fangbehälter (4, 4a) von dem einen Fütterraum (13, 13a, 13b) bildenden Compartment oder weiteren Behälter abgekoppelt ist, so daß die Fische (23) diesen Fütterraum (13, 13a, 13b) in einer vorgegebenen Richtung durchschwimmen können, und daß während der Konditionierungsphase in den Fütterraum Futter und/oder Lockstoffe eingebracht werden.

2. Verfahren nach Anspruch 1, dadurch gekennzeichnet, daß die Abgabe von Futter und/oder Lockstoffen in vorgegebenen Zeitintervallen erfolgt,
wobei vorzugsweise in einer vorgegebenen zeitlichen Zuordnung zur Abgabe des Futters und/oder der Lockstoffe ein akustisches und/oder optisches und/oder mechanisches Signal erzeugt wird,
und/oder
wobei vorzugsweise das Signal vor oder mit dem Beginn der Abgabe von Futter-oder Lockstoffen erfolgt.

3. Verfahren nach Anspruch 1 oder 2, dadurch gekennzeichnet,
daß zur Erzielung einer vorgegebenen Schwimmrichtung für die Fische (23) beim Durchschwimmen des Fütterraumes (13, 13a, 13b) die wenigstens eine Einschwimmöffnung (17) sowie die wenigstens eine Ausschwimmöffnung (18, 41) dieses Raumes von jeweils einem reusenartigen Element (17, 18, 41) gebildet ist,
und/oder
daß der Fangbehälter (4, 4b) und/oder der weitere Behälter (13, 13a, 13b) zumindest teilweise korbartig mit netz- und/oder gitterartigen Wandabschnitten ausgebildet sind.

4. Verfahren zum Fangen von Fischen (23) unter Verwendung eines zumindest eine reusenartige Einschwimmöffnung (17) aufweisenden Behälters (40), dadurch gekennzeichnet, daß der Behälter (46) während einer Gewöhnungs- und/oder Konditionierungsphase der Einschwimmöffnung (17) gegenüberliegend einen ebenfalls reusenartig ausgebildete Ausschwimmöffnung (18) derart aufweist, daß ein Durchschwimmen des Innenraumes des Behälters (46) für Fische in einer vorgegebenen Richtung möglich ist, daß in den Behälter (46) während der Konditionierungsphase Futter- und/oder Lockstoffe eingebracht werden, und daß nach Abschluß der Konditionierungsphase der Behälter (46) an der Ausschwimmöffnung verschlossen wird.

5. Vorrichtung zum Fangen von Fischen (23), bestehend aus einem Fangbehälter (4, 4b) mit Einschwimmöffnung (15) und aus einem weiteren Behälter bzw. Compartment mit wenigstens einer Einschwimmöffnung (17) und einer Ausschwimmöffnung (18, 41), an dessen Ausschwimmöffnung (18, 41) der Fangbehälter (4, 4b) mit seiner Einschwimmöffnung (15) wieder-lösbar ankuppelbar ist, dadurch gekennzeichnet, daß das Compartment bzw. der weitere Behälter (13, 13a, 13b) im Bereich seiner wenigstens einen Einschwimmöffnung (17) reusenartig ausgebildet ist, und daß der Fangbehälter (4, 4b) und/oder das Compartment bzw. der weitere Behälter (13, 13a, 13b) im Anschlußbereich zwischen beiden Behältern (4, 4b; 13, 13a, 13b) ebenfalls reusenartig ausgebildet sind.

6. Vorrichtung nach Anspruch 5, dadurch gekennzeichnet, daß der Fangbehälter (4, 4b), der vorzugsweise korbartig mit netz- und/oder gitterartigen Wandabschnitten oder zumindest teilweise mit Wandabschnitten aus einem durchsichtigen Material hergestellt ist, im Bereich seiner Einschwimmöffnung (15) und/oder der weitere Behälter (13, 13a, 13b), der vorzugsweise korbartig mit netz- und/oder gitterartigen Wandabschnitten oder zumindest teilweise mit Wandabschnitten aus einem durchsichtigen Material hergestellt ist, im Bereich seiner Ausschwimmöffnung (18, 41) reusenartig ausgebildet ist.

7. Vorrichtung nach einem der Ansprüche 5 oder 6, dadurch gekennzeichnet, daß der weitere Behälter ein einen Fütterraum bildender Fütterbehälter (13, 13a, 13b) ist, wobei vorzugsweise der Innenraum des weiteren Behälters (13, 13a, 13b) mit wenigstens einer Einrichtung (24, 26, 26a) zum Zuführen von Futter verbunden ist, die (Einrichtung) vorzugsweise ein Fütterungsautomat ist, dessen Ausgang über wenigstens einen Kanal, beispielsweise über einen in seiner Länge und/oder in seinem Verlauf veränderbaren Kanal, mit dem Innenraum in Verbindung steht.

8. Vorrichtung nach einem der Ansprüche 5 bis 7, gekennzeichnet durch
eine Hebeeinrichtung (3) zum Absenken und Anheben des Fangbehälters (4, 4b)
und/oder
eine Hebeeinrichtung (9) zum Anheben und Absenken des weiteren Behälters (13, 13a, 13b)
und/oder
einen Fangbehälter (4b), der relativ zum weiteren Behälter (13b) schwenkbar an einem Rahmengestell (36, 39) vorgesehen ist.

9. Vorrichtung nach einem der Ansprüche 5 bis 8, dadurch gekennzeichnet, daß der Fangbehälter (4, 4b) an einer Seite ein reusenartiges Element (15) aufweist, welches die Einschwimmöffnung bildet und an der Außenseite des Fangbehälters (4, 4b) einen ersten Öffnungsquerschnitt (14) mit größerem Durchmesser und im Innenraum des Fangbehälters (4, 4b) einen zweiten Öffnungsquerschnitt (16) mit kleinerem Durchmesser bildet.

10. Vorrichtung nach einem der Ansprüche 5 bis 9, dadurch gekennzeichnet, daß die wenigstens eine Einschwimmöffnung und/oder die wenigstens eine Ausschwimmöffnung des weiteren Behälters (13, 13a, 13b) jeweils von einem reusenartigen Element (17, 18) gebildet ist, daß das die Einschwimmöffnung bildende reusenartige Element (17) in Einschwimmrichtung einen größeren ersten Öffnungsquerschnitt (19) und auf diesen folgend im Bereich des Innenraumes des weiteren Behälters einen zweiten kleineren Öffnungsquerschnitt (20) besitzt, und daß das die Ausschwimmöffnung bildende reusenartige Element (18) in Ausschwimmrichtung im Bereich des Innenraumes einen ersten größeren Öffnungsquerschnitt (21) und auf diese folgend einen zweiten, kleineren Öffnungsquerschnitt aufweist,
wobei vorzugsweise das die Einschwimmöffnung bildende reusenartige Element (17) im Inneren des Innenraumes des weiteren Behälters (13, 13a, 13b) angeordnet ist und/oder das die Ausschwimmöffnung bildende reusenartige Element (18) über die Außenseite des weiteren Behälters (13, 13a, 13b) vorsteht.

11. Vorrichtung nach einem der Ansprüche 5 bis 10, gekennzeichnet durch
wenigstens einen Signalgeber (30) zur Erzeugung eines akustischen und/oder optischen Signals in dem Gewässer (2)
und/oder
wenigstens einem Signalgeber zur Erzeugung eines Bewegungs-Signales in dem Gewässer (2)
und/oder
eine Steuereinrichtung (28, 44) für den wenigstens einen Signalgeber (30) sowie für die Mittel (24, 26, 26a) zur Abgabe des Futters in der Weise, daß in einer vorgegebenen zeitlichen Zuordnung zur Futterabgabe der wenigstens eine Signalgeber (30) zur Abgabe des Signales aktiviert wird,
wobei vorzugsweise die Steuereinrichtung (28) den Signalgeber (30) zumindest am Beginn der Futterabgabe aktiviert und/oder ein Steuerelement aufweist, welches den wenigstens einen Signalgeber (30) vor der Abgabe des Futters einschaltet.

12. Vorrichtung nach einem der Ansprüche 5 bis 11, gekennzeichnet durch einen Schwimmkörper oder eine schwimmende Plattform (1), an welcher der Fangbehälter (4, 4b) sowie der weitere Behälter (13, 13a, 13b) vorgesehen sind.

13. Vorrichtung nach einem der Ansprüche 5 bis 12, dadurch gekennzeichnet, daß am weiteren Behälter (13a, 13b) Mittel zum Ankoppeln des Fangbehälters (4, 4b) vorgesehen sind,
wobei vorzugsweise die Mittel zum Ankoppeln des Fangbehälters (4) von wenigstens einer bevorzugt vertikalen Führung (34) gebildet sind, in die zum Ankoppeln eine Gegenführung des Fangbehälters (4) eingreift,
und/oder
wobei vorzugsweise bei einer von einem reusenartigen Element (18) gebildeten Ausschwimmöffnung des weiteren Behälters (13a) die Mittel zum Ankoppeln des Fangbehälters (4) in der Ebene der kleineren, die Ausschwimmöffnung bildenden Öffnung (22) des reusenartigen Elementes (18) vorgesehen sind,
und/oder
wobei vorzugsweise die Mittel zum Ankoppeln des Fangbehälters (4b) von einem schwenkbaren Hilfsrahmen (42) gebildet sind, an welchem das die Ausschwimmöffnung bildende reusenartige Element (41) des weiteren Behälters (13b) mit einem Ende gehalten ist.
